Europäisches Patentamt

European Patent Office

Office européen des brevets

(11) Publication number: **0 168 670**
**B1**

(12) **EUROPEAN PATENT SPECIFICATION**

(45) Date of publication of patent specification: **05.10.88**

(21) Application number: **85107666.1**

(22) Date of filing: **21.06.85**

(51) Int. Cl.⁴: **G 21 C 7/26**

(54) **Fuel assembly.**

(30) Priority: **02.07.84 US 626847**

(43) Date of publication of application:
**22.01.86 Bulletin 86/04**

(45) Publication of the grant of the patent:
**05.10.88 Bulletin 88/40**

(84) Designated Contracting States:
**BE DE FR GB IT SE**

(56) References cited:
**EP-A-0 048 343**
**DE-A-1 926 344**
**DE-A-2 005 391**
**DE-A-2 434 226**
**FR-A-2 416 529**
**US-A-3 379 619**

(73) Proprietor: **WESTINGHOUSE ELECTRIC CORPORATION**
**Westinghouse Building Gateway Center**
**Pittsburgh Pennsylvania 15222 (US)**

(72) Inventor: **Gjertsen, Robert Kenneth**
**126 Penn Lear Drive**
**Monroeville Pennsylvania (US)**
Inventor: **Huckestein, Edgar Anthony**
**211 West Hutchinson Avenue**
**Pittsburgh Pennsylvania (US)**
Inventor: **Bassler, Elmer Arthur**
**14214 Roberta Drive**
**North Huntington Pennsylvania (US)**
Inventor: **Salton, Robert Byron**
**320 Tahoe Drive**
**Pittsburgh Pennsylvania (US)**
Inventor: **Tower, Stephen Nelson**
**P.O. Box 414 Culp Road**
**Murrysville Pennsylvania (US)**

(74) Representative: **Casalonga, Axel et al**
**BUREAU D.A. CASALONGA OFFICE JOSSE & PETIT Morassistrasse 8**
**D-8000 München 5 (DE)**

EP 0 168 670 B1

Courier Press, Leamington Spa, England.

## Description

This invention relates in general to pressurized water nuclear reactors and, in particular, to a fuel assembly for a pressurized water reactor employing a fluid moderator system for the purpose of spectral shift control.

In typical pressurized water nuclear reactors, control over the fission process, or reactivity control, is accomplished during reactor operation by varying the amount of neutron-absorbing materials within the core of the reactor. One method of effectuating reactivity control is by the use of control rods which contain such neutron absorbing materials, or poisons, and are inserted in the reactor core. Control over the fission process may be accomplished by varying the number of control rods, the size of the control rods, and/or the radial and axial locations of the control rods within the core. Burnable (by the fissioning process) poisons and poisons dissolved in the reactor coolant can additionally be used for the purpose of reactivity control.

In order to lengthen the core life, it is typical, in conventional commercial pressurized water reactors, to design-in an excess of reactivity at reactor start-up. The excess reactivity is controlled as explained above, and is gradually depleted over the extended lifetime of the core. Soluble boron dissolved in the reactor coolant is most often used to control the initial excess reactivity. As the excess reactivity in the core is depleted during the reactor operation, the neutron absorbing boron is gradually removed so as to utilize the original excess reactivity to maintain the fission process. While this control arrangement provides an effective means of controlling a nuclear reactor over an extended core life, the neutron absorbing boron used during core life absorbs neutrons and removes reactivity from the reactor core that could otherwise be used in a more productive manner. For example, the reactivity could be used to convert fertile material into plutonium or fissile uranium which even further extends the reactor core life by fissioning the then generated fissile material. Without such conversion, however, the consumption of reactivity is an inefficiency depletion of uranium resulting in higher fuel costs than would otherwise result. Hence it would be more desirable to extend the life of a core by providing an initial amount of excess reactivity without suppressing the excess reactivity with neutron absorbing materials but rather using the excess reactivity in a positive manner thereby providing an extended core life with a significantly lower overall fuel cost.

It is well known that fuel element enrichment can be reduced and the conversion ratio of producing fissile materials can be increased by employing a "hardened" (higher neutron energy) spectrum during the first part of the fuel cycle to reduce excessive reactivity and to increase the conversion of fertile material to fissile material; then employing a "softer" (lower energy) neutron spectrum during the latter part of the fuel cycle to increase reactivity and extend the core life by fissioning the previously generated fissile material. One such method utilizing the above is known as spectral shift control which provides a reactor with an extended core life while reducing the amount of neutron absorbing material in the reactor core. In this art, the reduction of the excess reactivity, and, therefore, the neutron absorbing material, is achieved by replacing a portion of the ordinary reactor water with heavy water.

The heavy water is a less effective moderator than the ordinary reactor coolant water. This retards the chain reaction by shifting the neutron spectrum to higher energies permitting the reactor to operate at full power with reduced neutron absorbing material. This shift to a hardened neutron spectrum causes more fertile U-238 or Th-232 to be converted to fissile Pu-239 or U-233, respectively, which may thereafter be consumed in the reactor core, to produce heat and further extend the core life. Thus, the shift to an initially hard spectrum results in more neutrons being consumed in a useful manner rather than being wasted by the use of poisons. As the fissile material is consumed, the heavy water is gradually replaced with ordinary reactor coolant water creating a softer neutron spectrum whereby the core reactivity is maintained at a proper level. At the end of the core life, essentially all of the heavy water has been replaced by the ordinary reactor coolant water. Thus, the reactor can be controlled by means of control rods and without the use of additional neutron absorbing material at start-up, which results in significant fuel-cost savings. Moreover, the production of additional Pu-239 or U-233 likewise reduces the U-235 enrichment requirements.

While the theory of spectral shift control is well known in the art, there still exists a need for means enabling it to be implemented in a practical as well as effective manner.

It is the principal object of the invention to satisfy this need, and the invention accordingly resides in a fuel assembly for use with a pressurized-water nuclear reactor having spectral-shift capability, said fuel assembly including a plurality of elongate fuel elements, and means providing axial support for the fuel elements and supporting the latter laterally in an array in which the elongate fuel elements are spaced parallel with respect to each other, said means being adapted to permit a flow of moderator/coolant through the fuel assembly when in use, characterized by fluid moderator control means for providing, within the fuel assembly, a volume of low neutron absorbing moderator fluid which is selectively variable as to its neutron moderating effectiveness, said fluid moderator control means comprising a moderator fluid flow system which is sealed from said flow of moderator/coolant.

The invention providing a moderator fluid flow system which is sealed and separate from the regulator flow of moderator/coolant through the fuel assembly enables spectral shift control to be performed readily, effectively, and in a most advantageous manner insofar as the sealed fluid flow system permits heavy water ($D_2O$), light water ($H_2O$) and $D_2O/H_2O$ mixtures of various and variable concentrations to be introduced into the fuel assembly without affecting the make-up of the moderator/coolant itself.

In the preferred embodiment of the invention, the moderator fluid flow system comprises a plurality of moderator control tubes interspersed among the fuel elements, and two flow manifolds sealingly connected to the moderator control tubes and connecting the latter in fluid flow communication between an inlet and an outlet.

The preferred embodiment of the invention will now be described, by way of example, with reference to the accompanying drawings, in which:

Figure 1 is a vertical, partially cross-sectioned view of a fuel assembly embodying the invention;

Figure 2 is a cross-sectional view taken along the line 2—2 of Figure 1, not showing the grids;

Figure 3 is a view of the top plate of the upper nozzle, taken along the line 3—3 of Figure 1 but not showing the top nozzle sprngs;

Figure 4 is a view of the upper adaptor plate taken along the line 4—4 of Figure 1;

Figure 5 is a view of the upper manifold taken along the line 5—5 of Figure 1;

Figure 6 is a view of the lower manifold taken along the line 6—6 of Figure 1;

Figure 7 is a view of the adaptor plate of the bottom nozzle taken along the line 7—7 of Figure 1; and,

Figure 8 is a cross-sectional view illustrating the connection of the control rod guide thimble to the top nozzle adaptor plate.

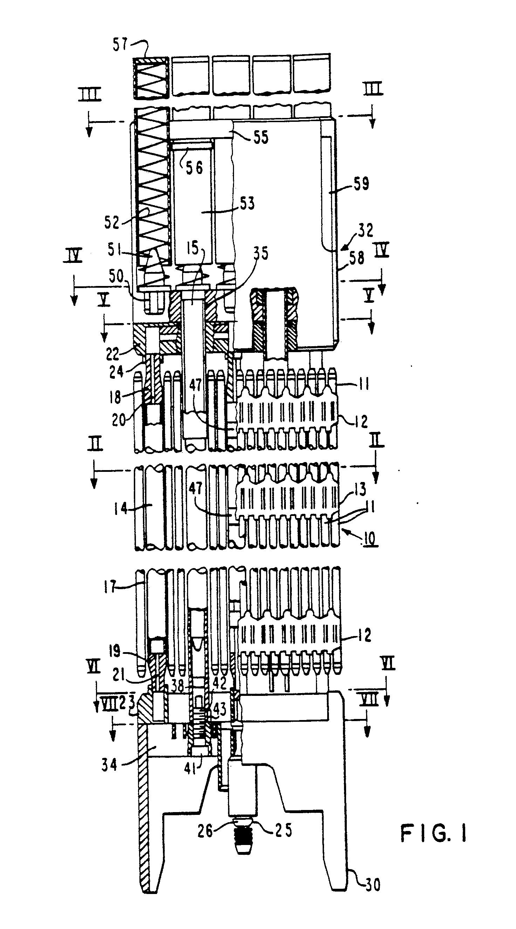

Referring now to Figure 1 of the drawings the nuclear fuel assembly illustrated therein and generally designated with the reference numeral 10 includes a plurality of parallel spaced fuel elements 11 held in place by upper and lower Inconel grids 12 and a plurality of intermediate Zircaloy grids, such as grid 13. The grids 12 and 13 serve also to space and support several (as shown, twenty-one) moderator control tubes 14, and some (as shown, four) rod cluster control (RCC) tubes or guide thimbles 15.

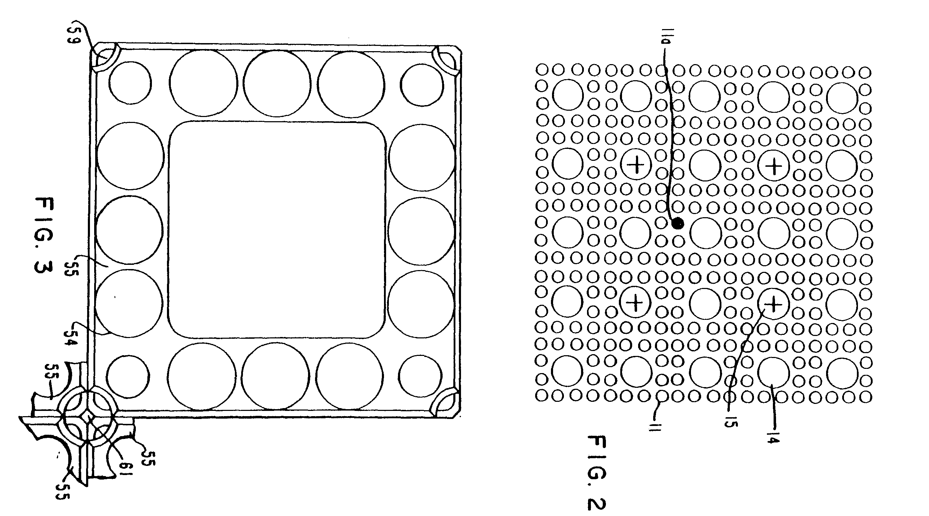

The cross-sectional arrangement of the above-noted components, without the grids 12 and 13, is shown in Figure 2. Each fuel element 11 comprises an elongate cylindrical metallic tube containing nuclear fuel pellets and having both ends sealed by means of appropriately shaped end plugs. Such fuel elements are well known in the art. As shown in Figure 2, the fuel elements 11 are arranged in a substantially 20×20 square array with an equal pitch between adjacent fuel elements 11. One tube 11a may be used for purposes of instrumentation. Each moderator control tube 14, preferably made of Zircaloy, and each rod cluster control tube 15, also preferably made of Zircaloy, occupies the space of and displaces four fuel rods. Hence, there are a total of two hundred and ninety-nine fuel elements 11.

The control tubes 14 and 15 are arranged in a 5×5 array with an equal pitch between adjacent tubes. For purposes of clarity, the moderator control tubes 14 are shown in Figure 2 as blank circles whereas each rod cluster control tube 15 is shown as a circle marked with a cross. Since the rod cluster control tubes 15 also form a square array, they are adapted to receive a conventional type of control rod cluster.

As can be seen from Figure 1, each moderator control tube 14 comprises an elongate hollow tube 17 having an upper end plug 18 and a lower end plug 19 affixed thereto, such as by welding. The end plugs 18 and 19 have passageways 20 and 21 therethrough for the flow of either heavy water or regular reactor coolant water, or a combination thereof.

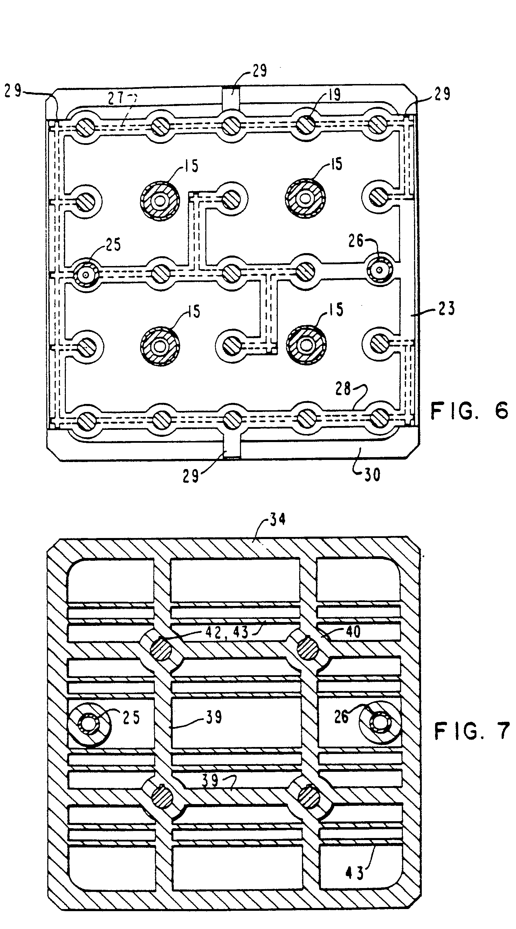

The fuel assembly 10 further includes an upper manifold 22 and a lower manifold 23, shown in plan in Figures 5 and 6, respectively. Each manifold 22 and 23 may comprise a Zircaloy casting. The lower end plugs 19 of the moderator control tubes 14 are threadingly connected to the lower manifold 23, whereas the upper end plugs 18 thereof are seated in flanges 24 provided on the underside of the upper manifold 22. In addition, both ends of each moderator control tube are welded to the respective manifolds for pressure-sealing purposes. The guide thimbles 15 extend through and are not connected to the upper and lower manifolds, as shown in Figures 5 and 6.

Two spring-loaded seal connectors 25 and 26 are connected to the lower manifold 23 so that the seal connector 25 provides an inlet for heavy water or a combination of heavy and regular water flowing through the moderator control tubes 14, and the seal connector 26 provides an outlet from the one moderator control tube 14 which is axially aligned therewith. As seen from Figure 6, the seal connector 25 forms the inlet for twenty of the moderator control tubes which are interconnected through flow channels 27 formed in the lower manifold 23 but not communicating with the seal connector 26. The flow channels 27 may be "gun drilled" horizontally through ribs 28 and then plug-welded (not shown) at the drill entrances of the drilled holes. Of course, a vertical through-hole is required in the lower side of the lower manifold at each axial location of the seal connection 25 and 26, and blind holes drilled through the upper surface of the lower manifold are required at the locations of the remaining nineteen moderator control tubes. The lower manifold 23 is seated within cutouts 29 provided in the four sides of the lower nozzle 30 of the fuel assembly 10, and the upper manifold (Figure 5) is similarly seated within cutouts 31 provided in the four sides of the upper nozzle 32 of the first assembly. Thus it will be appreciated that the lower manifold 23, the moderator control tubes 14, the fuel rods 11, the grids 12 and 13, and the upper manifold 22 form a subassembly which is captured between the lower and upper nozzles 30 and 32. Additionally, there are structural interconnections between this subassembly and the four guide thimbles 15, and will be more fully explained hereinafter.

Referring to Figure 5, the upper manifold 22 provides flow communication among the twenty-one moderator control tubes by means of flow channels 36 which likewise may be "gun drilled" horizontally through ribs 37 and then plug-welded (not shown) at the drill entrances of the drilled holes. A vertical blind hole is provided in the lower side of the upper manifold 22 at each axial location of the twenty-one moderator control tubes 14. Because of the sealed arrangement this provided between the bottom manifold 23, the upper manifold 22, and the moderator control tubes 14, heavy water or a combination of heavy water and regular water may be introduced through the seal connector 25, thence to flow through the flow channels 27 in lower manifold 23, up through twenty moderator control tubes 14, through the flow passages 36 in the upper manifold 22, down through the remaining moderator control tube communicating with the seal connector 26, and out through the latter. The seal connectors 25 and 26 are adapted to be fitted to the lower support plate (not shown) of a nuclear reactor core, and to appropriate flow inlet and outlet channels provided therein.

A structural lower adaptor plate 34 is formed integral with the lower nozzle 30, and a structural upper adaptor plate 35 is formed integral with the upper nozzle 32, the guide thimbles 15 being structurally connected to the adaptor plates 34 and 35. Hence, the upper nozzle 32, and guide thimbles 15, the upper manifold 22, the moderator control tubes 14, the fuel rods 11, the grids 12 and 13, the lower manifold 23, and the lower nozzle 30 together form the structural make-up of the fuel assembly 10.

Each guide thimble 15 comprises an elongate hollow Zircaloy tube open at its upper end and fitted with a connector plug 38 at its lower end, and is adapted to receive, for axial movement therein, a control rod of a control rod cluster. The plug 38 has in the lower end thereof an internally threaded blind hole for receiving a screw 41 used in fastening the guide thimble 15 to the lower adaptor plate 34. The latter is shown in cross-section in Figure 7 as being in the form of a cross-beam lattice comprising four main beams 39 which are arranged in pairs intersecting each other at right angles and having bosses 40 for the screws 41 drilled through at the intersections thereof. In order to prevent twisting of any of the guide thimbles 15 when the screw 41 is torqued, a groove 42 may be machined in each boss which engages a corresponding key provided on the connector plug 38. Back screw 41 may be lock-welded to the associated boss 41 by means of a welded lock pin (not shown), as well known in the art. The adaptor plate 34 includes eight secondary beams 43 which, in conjunction with the lower manifold 23, provide for capture of some of the fuel rods 11. The upper adaptor plate 35, in conjunction with the upper manifold 22, provides for capture of the remainder of the fuel rods 11. In this manner, all of the fuel rods 11 are captured from either above or below.

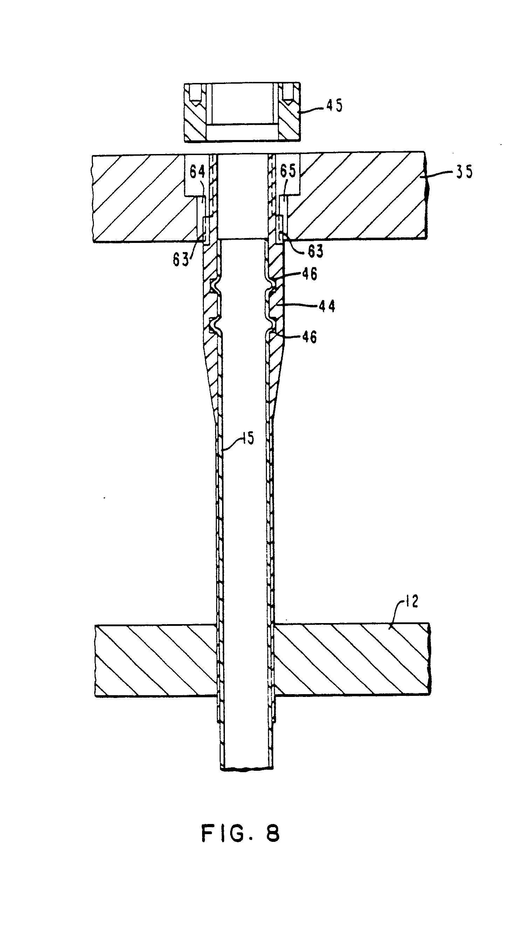

The upper ends of the guide thimbles 15 are structurally connected to the upper adaptor plate 35. More specifically, and with particular reference to Figure 8, a machined stainless-steel sleeve 44 is positioned within a hole in the upper adaptor plate 35 from the underside of the latter. A threaded lock ring 45 is threadedly engaged with an upper end portion of the sleeve 44 from the upper side of adaptor plate 35, and is lock-welded (not shown) to the same in order to prevent loosening. Keys 63 on the sleeve 44 engaged with key slots 64 and 65 in the upper adaptor plate 35 prevent twisting of sleeve 44 when the lock ring 45 is torque-tightened. The sleeve 44 extends downward from the adaptor plate 35 and guide thimble 15 is bulge connected to grooves 46 machined within the inner diameter of sleeve 44. Sleeve 44 extends down from adaptor plate 35 and through the uppermost grid 12 to which it is secured such as brazed or welded. One of the guide thimbles 15 has an upper end portion thereof inserted into the sleeve 44 and bulge-connected to grooves 46 machined in the inner wall thereof.

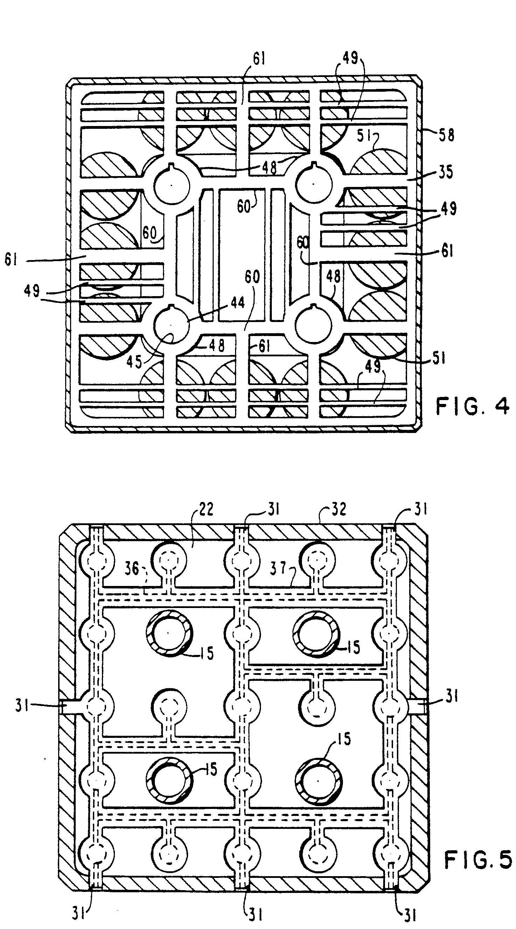

Like the lower adaptor plate 34 the upper adaptor plate 35 provides the main structural support of the fuel assembly 10 but at the opposite end thereof. As shown in Figure 4, it is made in the form of a cross-beam lattice comprising four main beams 60 arranged in pairs which intersect each other and have bosses 48 at their intersections to which the guide thimbles 15 are fastened in the manner described above in connection with the lower adaptor plate 34. The upper adaptor plate 35 further includes four additional main beams 61 and secondary beams 49. The latter add structural support and in conjunction with the upper manifold 22, provide for upper capture of fuel rods 11. The main beams 60 and 61 accept guide pins 51 for top nozzle springs 52. Each guide pin has a slot 50 extending into it from its lower end and fitting over the respective main beams 60 or 61 below the pin, the latter being welded to the beam. The springs 52 extend within spring retainer sleeves 53 and together with the latter and the pins 51 are arranged peripherally around the top nozzle 32. The spring retainer sleeves 53 seat upon the upper adaptor plate 35 and extend therefrom upwards and through holes 54 (Figure 3) in a top plate 55 of the upper nozzle 32. An inwardly extending flange 57 on the upper end of each sleeve 53, in conjunction with a retaining ring 56 fitted within a circumferential groove in the outer periphery of the sleeve 53, provides for capture of the sleeve by the top plate 55. The top nozzle 32 has side walls forming an enclosure 58 which may be integrally connected to the top plate 55 and the adaptor plate 35 o as to structurally connect these two members. The enclosure 58 also provides a plenum for reactor coolant flow exiting from the fuel assembly 10. As seen from Fgiure 3, each corner, such as corner 59, of the enclosure 58 is concave and defines a quarter-cylindrical cavity so that the adjoining corners of four adjacent fuel assemblies together will define a cylindrical opening, such as opening 61, for receiving one of several guide or fuel assembly positioning pins (not shown) on the upper core plate of a nuclear reactor.

Referring once more to Figure 1, the grids 12 and 13 hich are spaced along the fuel assembly 10 and provide support for the fuel rods 11, the control-rod guide thimbles 15, and the moderator control tubes 14 may be of conventional design, such as disclosed in U.S. Patent Nos. 3,379,614 and 3,379,619, for example. Thus, each of the grids 12 and 13 is an egg-crate-like structure composed of a plurality of straps fitted and joined together so as to define a plurality of open cells through which extend the individual fuel rods, guide thimbles, and moderator control tubes. The fuel rods 11 are laterally supported in the respective cells of each grid by means of springs and/or dimples formed on the grid straps, but are free to be moved longitudinally. The control-rod guide thimbles 15, on the other hand, are affixed to the grids either directly or, preferably, indirectly through metal sleeves, such as indicated at 47 in Figure 1, which sleeves are secured, e.g. welded or brazed, to the grid straps and, in turn, have the guide thimbles, which extend through the sleeves 47, fixedly connected, e.g. bulge-fitted, thereto, likewise as known per se. Preferably, such sleeves 47 are provided also at the grid cells assigned to have moderator control tubes 14 extending therethrough (see Figure 2); these sleeves likewise are secured, e.g. welded or brazed, to the grid strap segments defining the associated grid cells, however, the moderator control tubes 14 extending through the sleeves 47 are not fixedly connected or attached thereto but only receive lateral support therefrom.

When in operation, light water (H$_2$O) serving as a moderator and coolant introduced through the bottom nozzle 30 and exiting through the top nozzle 32 flows through the fuel assembly, as well known in the art. The moderator control tubes 14 together with the upper and lower flow manifolds 22 and 23 form a moderator fluid flow system which is sealed and separate from the flow of moderator/coolant through the fuel assembly, and permits spectral shift control, as initially explained herein, to be performed readily and in an advantageous manner.

**Claims**

1. A fuel assembly for use with a pressurized-water nuclear reactor having spectral-shift capability, said fuel assembly including a plurality of elongate fuel elements, and means providing axial support for the fuel elements and supporting the latter laterally in an array in which the elongate fuel elements are spaced parallel with respect to each other, said means being adapted to permit a flow of moderator/coolant through the fuel assembly when in use, characterized by fluid moderator control means for providing, within the fuel assembly, a volume of low neutron absorbing moderator fluid which is selectively variable as to its neutron moderating effectiveness, said fluid moderator control means comprising a moderator fluid flow system (14, 22, 23) which is sealed from said flow of moderator/coolant.

2. A fuel assembly according to Claim 1, characterized in that said moderator fluid flow system (14, 22, 23) includes a plurality of moderator control tubes (14) interspersed among the fuel elements (11).

3. A fuel assembly according to Claim 2, characterized in that said moderator fluid flow system (14, 22, 23) has an inlet (25) and an outlet (26), and includes two flow manifolds (22, 23) sealingly connected to said moderator control tubes (14) and connecting the latter in fluid flow communication between said inlet and said outlet.

4. A fuel assembly according to Claim 3, characterized in that at least one of the moderator control tubes (14) has one end thereof connected to said outlet (26), and each of the remaining moderator control tubes (14) has one end thereof connected to said inlet (25) through one (23) of the flow manifolds (22, 23), and has its other end connected to the other end of said at least one moderator control tube through the other flow manifold (22).

5. A fuel assembly according to Claim 3 or 4, characterized in that one (3) of the flow manifolds (22, 23) has formed therein both said inlet (25) and said outlet (26).

6. A fuel assembly according to Claim 3, 4 or 5, including a pair of flow nozzles disposed at the opposite ends of the fuel assembly and enabling said flow of moderator/coolant to enter and exit, respectively, the fuel assembly, characterized in that said flow nozzles (30, 32) have cutouts (29, 31) having the respective flow manifolds (22, 23) fit therein.

7. A fuel assembly according to Claim 6, characterized in that each of said flow nozzles (30 or 32) has side walls defining an enclosure (58) which is substantially rectangular in cross-section and is substantially aligned in cross-sectional outline with said array of fuel elements (11), said enclosure (58) of each flow nozzle having concave corners (59) each defining a quarter-cylindrical cavity.

8. A fuel assembly according to any one of the Claims 3 to 7, including a plurality of guide thimbles extending among the elongate fuel elements in parallel spaced relationship therewith, characterized in that the means for providing axial support for the fuel elements comprise a pair of support plates (34, 35) disposed at opposite ends of the guide thimbles (15) and affixed thereto, each of the guide thimbles (15) being bolted to one (34) of the support plates, and being connected to the other support plate (35) by means of a sleeve (44) which is releasably secured to said other support plate and to which an end portion of the guide thimble, being inserted in said sleeve (44), is bulge-joined.

9. A fuel assembly according to any one of Claims 2 to 8, wherein the means for laterally supporting the fuel element comprises at least one grid of egg-crate-like configuration defining a plurality of open cells for the fuel elements to extend therethrough, characterized in that said or each grid (12, 13) has open cells each with a coaxial sleeve (47) associated therewith and affixed to the grid, each of said moderator control tubes (14) extending through one of the open cells and the associated sleeve (47) and receiving lateral support from the latter.

## Patentansprüche

1. Brennstoffeinheit zur Verwendung bei einem zur Spektralverschiebung eingerichteten Druckwasserkernreaktor, die mehrere langgestreckte Brennelemente, sowie Mittel umfaßt, die eine axiale Abstützung der Brennelemente ergeben und diese seitlich in einer Anordnung abstützen, in der die langgestreckten Brennelemente parallel zueinander und im Abstand voneinander positioniert sind, wobei die erwähnten Mittel dazu ausgelegt sind, einen Moderator/Kühlmittelfluß durch die im Betrieb befindliche Brennstoffeinheit zuzulassen, gekennzeichnet durch Steuermittel für einen fließfähigen Moderator, die innerhalb der Brennstoffeinheit ein Volumen eines Neutronen gering absorbierenden Moderatorfluids vorsehen, das bezüglich seiner neutronenmoderierenden Wirksamkeit nach Wahl veränderbar ist, wobei die Stuermittel für den fließfähigen Moderator ein gegenüber dem Moderator/Kühlmittelfluß abgedichtetes Fließsystem (14, 22, 23) für das Moderatorfluid umfassen.

2. Brennstoffeinheit nach Anspruch 1, dadurch gekennzeichnet, daß das Fließsystem (14, 22, 23) für das Moderatorfluid mehrere zwischen den Brennelementen (11) eingesetzte Moderatorsteuerrohre (14) umfaßt.

3. Brennstoffeinheit nach Anspruch 2, dadurch gekennzeichnet, daß das Fließsystem (14, 22, 23) für das Moderatorfluid einen Einlaß (25) und einen Auslaß (26) aufweist und zwei Strömungsverteilerköpfe (22, 23) umfaßt, die in abgedichteter Weise mit den Moderatorsteuerrohren (14) verbunden sind und über diese eine Verbindung für die Fluidströmung zwischen dem Einlaß und dem Auslaß herstellen.

4. Brennstoffeinheit nach Anspruch 3, dadurch gekennzeichnet, daß mindestens eines der Moderatorsteuerrohre (14) an einem seiner Enden mit dem Auslaß (26) verbunden ist und die übrigen Moderatorsteuerrohre (14) jeweils an einem ihrer Enden über einen (23) der Strömungsverteilerköpfe (22, 23) mit dem Einlaß (25) verbunden sind und an ihren anderen Enden über den anderen Strömungsverteilerkopf (22) mit dem anderen Ende mindestens des einen Moderatorsteuerrohres verbunden sind.

5. Brennstoffeinheit nach Anspruch 3 oder 4, dadurch gekennzeichnet, daß der Einlaß (25) und Auslaß (26) beide in einem (23) der Strömungsverteilerköpfe (22, 23) ausgebildet sind.

6. Brennstoffeinheit nach Anspruch 3, 4 oder 5, mit einem Paar Strömungsstutzen, die an den entgegengesetzten Enden der Brennstoffeinheit angeordnet sind und dem Moderator/Kühlmittelfluß das Eintreten in die Brennstoffeinheit bzw. das Austreten aus der Brennstoffeinheit ermöglichen, dadurch gekennzeichnet, daß die Strömungsstutzen (30, 32) mit Ausschnitten (29, 31) versehen sind, in die die jeweiligen Strömungsverteilerköpfe (22, 23) eingepaßt sind.

7. Brennstoffeinheit nach Anspruch 6, dadurch gekennzeichnet, daß jeder der Strömungsstutzen (30 oder 32) mit Seitenwänden versehen ist, die eine Einfassung (58) begrenzen, die im Querschnitt im wesentlichen rechteckig ist und deren Querschnittsumriß im wesentlichen mit der Anordnung der Brennelemente (11) ausgerichtet ist, wobei die Einfassung (58) jedes Strömungsstutztens konkave Ecken (59) aufweist, die jeweils einen viertelzylinderförmigen Hohlraum begrenzen.

8. Brennstoffeinheit nach einem der Ansprüche 3 bis 7, mit mehreren Führungsmuffen, die sich entlang den langgestreckten Brennelementen parallel und im Abstand zu diesem erstrecken, dadurch gekennzeichnet, daß die Mittel, die eine axiale Abstützung der Brennelemente ergeben, eine Paar Stützplatten (34, 35) umfassen, die an entgegengesetzten Enden der Führungsmuffen (15) vorgesehen und an diesen befestigt sind, wobei jede der beiden Führungsmuffen (15) an eine (34) der Stützplatten festgeschraubt und mit der anderen Stützplatte mittels einer Hülse (44) verbunden ist, die lösbar an der anderen Stützplatte befestigt ist und an die ein Endteil der in die Hülse (44) eingeführten Führungsmuffe durch Ausbauchen verbunden ist.

9. Brennstoffeinheit nach einem der Ansprüche 2 bis 8, bei der die Mittel zum seitlichen Abstützen des Brennelementes mindestens ein rasterförmiges Gitter umfassen, das mehrere offene Zellen begrenzt, durch die sich die Brennelemente hindurcherstrecken, dadurch gekennzeichnet, daß das oder jedes der Gitter (12, 13) mit offenen Zellen versehen ist, die jeweils eine zugeordnete und am Gitter befestigte koaxiale Hülse aufweisen, wobei jedes der Moderatorsteuerrohre (14) sich durch eine der offenen Zellen und der zugeordneten Hülse (47) hindurcherstreckt und von dieser seitlich abgestützt wird.

## Revendications

1. Assemblage combustible destiné à être utilisé avec un réacteur nucléaire à eau pressurisée ayant la faculté d'un changement spectral, cet assemblage combustible comprenant une pluralité d'éléments combustibles de forme allongée, et un moyen assurant un support axial aux éléments combustibles et supportant ces derniers latéralement en un arrangement dans lequel les éléments combustibles de forme allongée sont espacés parallèlement les uns aux autres, ces moyens étant adaptés pour permettre l'écoulement d'un fluide modérateur/réfrigérant à travers l'assemblage combustible pendant l'utilisation, caractérisé par un moyen de commande à fluide modérateur pour assurer, à l'intérieur de l'assemblage combustible, un volume de fluide modérateur qui absorbe les neutrons lents et dont on peut modifier sélectivement l'effet sur la modération des neutrons, ce moyen de commande à fluide modérateur comprenant un système (14, 22, 23) d'écoulement de fluide modérateur qui est rendu étanche vis-à-vis de l'écoulement du fluide modérateur/réfrigérant.

2. Assemblage combustible selon la revendication 1, caractérisé en ce que le système (14, 22, 23) d'écoulement de fluide modérateur comprend une pluralité de tubes (14) de commande à fluide modérateur intercalés parmi les éléments combustibles (11).

3. Assemblage combustible selon la revendication 2, caractérisé en ce que le système (14, 22, 23) d'écoulement de fluide modérateur comporte une entrée (25) et une sortie (26) et comprend deux collecteurs (22, 23) d'écoulement, raccordés de façon étanche aux tubes (14) de commande à fluide modérateur et raccordant ces derniers en vue d'une communication d'écoulement de fluide entre ladite entrée et ladite sortie.

4. Assemblage combustible selon la revendication 3, caractérisé en ce qu'au moins un premier des tubes (14) de commande de modérateur est raccordé à une de ses extrémités à la sortie (26), et chacun des tubes restants (14) de commande à fluide modérateur est raccordé à une de ses extrémités à l'entrée (25) par l'intermédiaire d'un (23) des collecteurs (22, 23) d'écoulement et est raccordé à son autre extrémité à l'autre extrémité dudit prsmier tube de commande à fluide modérateur par l'intermédiaire de l'autre collecteur (22) d'écoulement.

5. Assemblage combustible selon la revendication 3 ou 4, caractérisé en ce que dans l'un (23) des collecteurs (22, 23) d'écoulement sont formées à la fois l'entrée (25) et la sortie (26).

6. Assemblage combustible selon la revendication 3, 4 ou 5, comprenant une partie d'ajutages d'écoulement disposés aux extrémités opposées de l'assemblage combustible et permettant à l'écoulement de fluide modérateur/réfrigérant de pénétrer dans l'assemblage combustible et d'en sortir, respectivement, caractérisé en ce que les ajutages (30, 32) d'écoulement comportent des ouvertures (29, 31) dans lesquelles sont montés les collecteurs d'écoulement respectifs (22, 23).

7. Assemblage combustible selon la revendication 6 caractérisé en ce que chacun des ajutages (30 ou 32) d'écoulement comporte des parois latérales formant une enveloppe (58) qui est sensiblement rectangulaire en coupe et qui est sensiblement alignée, en ce qui concerne son contour en coupe transversale, avec l'arrangement d'éléments combustibles (11), ladite enveloppe (58) de chaque ajutage d'écculement comportant des coins concaves (59) définissant chacun une cavité en quart de cylindre.

8. Assemblage combustible selon l'une quelconque des revendications 3 à 7, comprenant une plurliaté de tubes-guides s'étendant parmi les longs éléments combustibles dans une disposition espacée et parallèle vis-à-vis de ces derniers, caractérisé en ce que les moyens assurant un support axial aux éléments combustibles comprennent une paire de plaques de support (34, 35) disposées aux extrémités opposées des tubes-guides (15) et fixées à ces derniers, chacun des tubes-guides (15) étant fixé à l'aide d'un vis à une (34) des plaques de support et étant relié à l'autre plaque de support (35) au moyen d'un manchon (44) qui est fixé de façon démontable à l'autre plaque de support et auquel une partie d'extrémité du tube-guide, insérée dans le manchon (44), est raccordée par expansion.

9. Assemblage combustible selon l'une quelconque des revendications 2 à 8, dans lequel le moyen destiné à supporter latéralement l'élément combustible comprend au moins une grille ayant une configuration à claire-voie définissant une pluralité de cellules ouvertes à travers lesquelles s'étendent des éléments combustibles, caractérisé en ce que ladite grille ou chaque grille (12, 13) comporte des cellules ouvertes à chacune desquelles un manchon coaxial (47) est associé et est fixé à la grille, chacun des tubes (14) de commande à fluide modérateur s'étendant à travers une des cellules ouvertes et le manchon associé (47) et recevant un support latéral de ce dernier.

FIG. 1

FIG. 2

FIG. 3

FIG. 4

FIG.5

FIG. 6

FIG. 7

FIG. 8